# EUROPEAN PATENT APPLICATION

(11) **EP 4 685 953 A2**
(43) Date of publication of application: **28.01.2026**
(21) Application number: 25183268.9
(22) Date of filing: 17.06.2025
(51) Int. Cl.: H01M 50/213, H01M 50/244, H01M 50/264, H01M 50/291, H01M 50/249, H01M 50/107, H01M 50/207, H01M 50/77, H01M 12/06, H01M 10/613, H01M 10/625, H01M 10/6568, H01M 50/138, B60L 50/64

(54) **BATTERY ASSEMBLY FOR A TRANSPORTATION VEHICLE**

(30) Priority: 08.07.2024 US 202418766141
(71) Applicant: Lockheed Martin Corporation, Bethesda, MD 20817 (US)
(72) Inventor: Eller, Michael R., Mandeville (US); Brewer, Roger A., Weatherford (US); Li, Yifan, Belmont (US)
(74) Representative: Barker Brettell LLP

(57) **Abstract**

The disclosure provides a battery assembly (116). The battery assembly includes an intersection node assembly (120). The intersection node assembly includes an intersection node body (122), an inner surface (124) of the intersection node body that forms a hollow interior (126), and a plurality of openings (128) in the intersection node body, where the plurality of openings are in fluid communication with the hollow interior. The battery assembly includes a plurality of stiffener assemblies (118). The stiffener assemblies include a stiffener body (130), an inner surface (132) of the stiffener body that forms a hollow channel (134) through the stiffener body, wherein the hollow channel is in fluid communication with a respective opening in the plurality of openings of the intersection node body, and at least one battery.

## Description

### TECHNICAL FIELD

This disclosure generally relates to transportation vehicles. More particularly, this disclosure relates to a battery assembly for a transportation vehicle.

### BACKGROUND

The transition to electric vehicles is becoming ubiquitous across nearly all transportation sectors for both commercial and military applications. The benefits are widely understood to be less emissions, reduced logistics for refueling, reduced maintenance, and reduced lifetime cost of operation. One limitation to realizing widespread implementation of electric vehicles is battery energy density (e.g., the kilowatt hours of energy available for a given battery mass). Currently, electric vehicles, specifically aircraft, have less range and payload carrying capacity compared to petroleum-fueled vehicles because of the limited energy density associated with current state-of-the-art battery technologies.

### SUMMARY

Current electric vehicles, specifically aircraft, have less range and payload carrying capacity compared to petroleum-fueled vehicles because of the limited energy density associated with current state-of-the-art battery technologies. Further, higher energy density batteries such as metal-air batteries, are not yet scalable to larger and more complex transportation vehicles.

The systems and methods described in the present disclosure provide practical applications and technical advantages that overcome the above-mentioned technical problems. In one embodiment, a battery assembly is provided that may be integrated into the structure of various transportation vehicles (e.g., aircraft, spacecraft, marine craft, land vehicles, railcars, and the like). In some embodiments, the provided battery assembly is configured to house at least one battery. For example, the battery assembly may comprise one or more rechargeable batteries (e.g., lithium-ion batteries, lithium-gas batteries, lithium-sulfur batteries, aluminum-ion batteries, and the like) or one or more metal-air batteries (zinc-air battery, aluminum-air battery, iron-air battery, lithium-air battery, and the like). The provided battery assembly may advantageously be integrated into the structure of the transportation vehicle as a stiffening element in order to minimize an amount of "dead weight" associated with the battery assembly within the structure. The battery assembly may be configured to house higher energy density batteries, such as metal-air batteries. In this way, the battery assembly may improve the energy density and structural integrity of the transportation vehicle. Additionally, integrating the battery assembly into the structure of the transportation vehicle may increase a payload carrying capacity of the transportation vehicle. For example, rather than storing the battery assembly in a cargo hull of the transportation vehicle, the battery assembly may be integrated into the structure of the transportation vehicle as described herein, thereby increasing an amount of space for cargo. Furthermore, the provided battery assembly and transportation vehicle may include one or more access ports that allows for efficient replacement of an anode in the metal-air battery or for maintenance of the one or more rechargeable batteries. The systems and methods described herein also provide a pump and pumping circuit that manages electrolyte flow through the battery assembly to maximize performance of the metal-air battery.

In one embodiment, the present disclosure provides a battery assembly for a transportation vehicle. The battery assembly includes an intersection node assembly. The intersection node assembly includes an intersection node body, an inner surface of the intersection node body that forms a hollow interior, and a plurality of openings in the intersection node body that are in fluid communication with the hollow interior. The battery assembly includes a plurality of stiffener assemblies. The stiffener assemblies may include a stiffener body and an inner surface of the stiffener body that forms a hollow channel through the stiffener body, where the hollow channel is in fluid communication with a particular opening in the plurality of openings of the intersection node body. The stiffener assembly may include at least one battery.

In one embodiment, the at least one battery comprises a metal-air battery. The metal-air battery includes a cathode assembly positioned between the hollow channel in the stiffener body and air external to the stiffener body. The cathode assembly includes a hydrophobic gas diffusion layer, a catalyst layer, and a current collector. The metal-air battery also includes an anode assembly positioned within the hollow channel of the stiffener body. The anode assembly includes a housing having a housing body that is positioned between a first end cap and a second end cap. The housing body is porous and configured to allow an electrolyte to pass through the housing body. The housing body includes at least one anode positioned within the housing body.

In another embodiment, the at least one battery comprises a rechargeable battery. For example, the stiffener body may comprise a housing positioned within the hollow channel of the stiffener body. The housing may have a housing body positioned between a first end cap and a second end cap. The housing body may include at least one rechargeable battery positioned between the first end cap and the second end cap.

In yet another embodiment, the present disclosure provides a transportation vehicle. The transportation vehicle includes a vehicle body including an interior surface. The transportation vehicle includes the battery assembly coupled to the interior surface of the vehicle body. The transportation vehicle may include a pump in fluid communication with the hollow channel of one or more of the plurality of stiffener assemblies, where the pump is configured to circulate the electrolyte through the hollow channel of the one or more of the plurality of stiffener assemblies.

Certain embodiments of this disclosure may include some, all, or none of these advantages. These advantages and other features will be more clearly understood from the following detailed description taken in conjunction with the accompanying drawings and claims.

### BRIEF DESRIPTION OF THE DRAWINGS

For a more complete understanding of this disclosure, reference is now made to the following brief description, taken in connection with the accompanying drawings and detailed description, wherein like reference numerals represent like parts.
FIG. 1 illustrates a transportation vehicle according to an embodiment of the present disclosure;
FIG. 2 illustrates a cross-sectional view of the transportation vehicle of FIG. 1;
FIG. 3 illustrates a battery assembly according to an embodiment of the present disclosure;
FIG. 4 illustrates a cross-sectional view of the battery assemblies from FIG. 3;
FIG. 5 is a partially exploded view of the battery assembly of FIG. 3;
FIG. 6 is an anode assembly according to an embodiment of the present disclosure;
FIG. 7 is a first connector bar connecting two anode assemblies according to an embodiment of the present disclosure;
FIG. 8 is a second connector bar connecting two anode assemblies according to an embodiment of the present disclosure;
FIG. 9 is a perspective view of the battery assembly of FIG. 3 illustrating the first connector bar and the second connector bar from FIGS. 7-8;
FIG. 10 is a perspective view of the battery assembly of FIG. 3 illustrating the removal of an anode assembly according to an embodiment of the present disclosure;
FIG. 11 is a frontal view of the battery assembly taken along view Y-Y from FIG. 9;
FIG. 12 is a side view of the battery assembly taken along view X-X from FIG. 9;
FIG. 13 illustrates a ball and socket joint for the connector bar according to one embodiment of the present disclosure;
FIG. 14 illustrates a cross-sectional view of the ball and socket joint from FIG. 13;
FIG. 15 illustrates access ports for the transportation vehicle according to an embodiment of the present disclosure;
FIG. 16 illustrates the anode assemblies being inserted and removed from the access ports of the transportation vehicle of FIG. 15;
FIG. 17 illustrates the anode assembly being removed from the access ports positioned in a rear of the transportation vehicle according to some embodiments of the present disclosure;
FIG. 18 illustrates a housing comprising a rechargeable battery according to some embodiments of the present disclosure;
FIG. 19 illustrates the housing of FIG. 18 according to an embodiment of the present disclosure;
FIG. 20 illustrates a battery assembly comprising a rechargeable battery according to one embodiment of the present disclosure;
FIG. 21 illustrates a pumping circuit according to an embodiment of the present disclosure;
FIG. 22 illustrates a pumping circuit of FIG. 21 with a heat exchanger according to an embodiment of the present disclosure; and
FIG. 23 illustrates a panel assembly of the transportation vehicle according to an embodiment of the present disclosure.

### DETAILED DESCRIPTION

As discussed above, current electric vehicles, specifically aircraft, have less range and payload carrying capacity compared to petroleum-fueled vehicles because of the limited energy density associated with current state-of-the-art battery technologies. Further, higher energy density batteries such as metal-air batteries, are not yet scalable to larger and more complex transportation vehicles.

The systems and methods described in the present disclosure provide practical applications and technical advantages that overcome the above-mentioned technical problems. In one embodiment, a battery assembly is provided that may be integrated into the structure of various transportation vehicles (e.g., aircraft, spacecraft, marine craft, land vehicles, railcars, and the like). The present disclosure also provides a transportation vehicle that comprises the battery assembly. In some embodiments, the provided battery assembly is configured to house at least one battery (e.g., rechargeable batteries or metal-air batteries). The provided battery assembly may advantageously be integrated into the structure of the transportation vehicle as a stiffening element in order to minimize an amount of "dead weight" associated with the battery assembly within the structure. In this way, the battery assembly may improve the energy density and structural integrity of the transportation vehicle. Additionally, integrating the battery assembly into the structure of the transportation vehicle may increase a payload carrying capacity of the transportation vehicle. For example, rather than storing the battery assembly in a cargo hull of the transportation vehicle, the battery assembly may be integrated into the structure of the transportation vehicle, as described herein. Furthermore, the provided battery assembly and transportation vehicle may include one or more access ports that allows for efficient replacement of an anode in the metal-air battery. The systems and methods described herein also provide a pump and pumping circuit that manages electrolyte flow through the battery assembly to maximize performance of the metal-air battery, or to provide cooling with a coolant to a rechargeable battery.

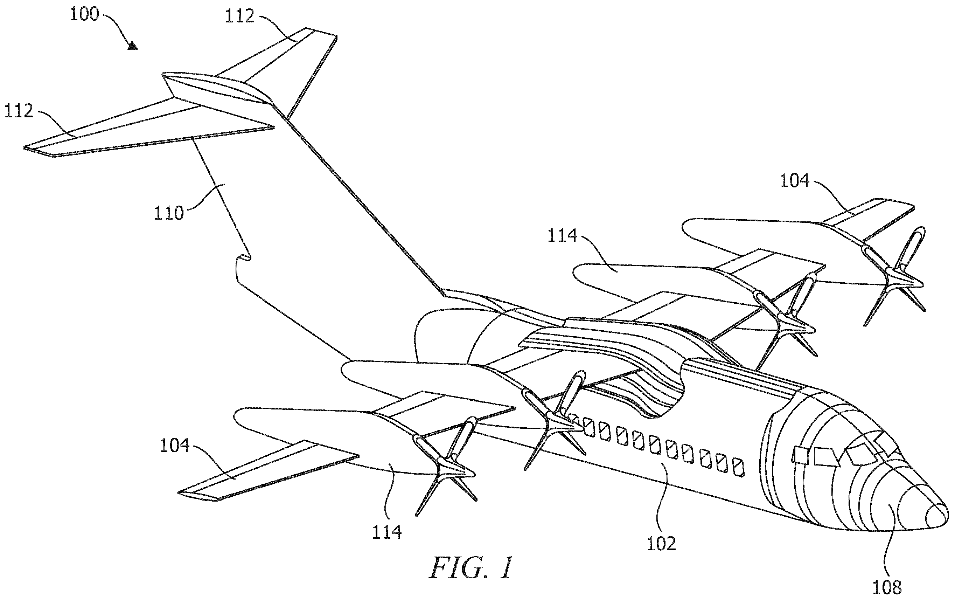

FIGS. 1-2 illustrate a transportation vehicle 100 according to an embodiment of the present disclosure. In one embodiment, the transportation vehicle 100 is an aircraft that includes a vehicle body 102 (e.g., a fuselage) having an interior surface 104. The vehicle body 102 may include wings 106 connected to the vehicle body 102. The transportation vehicle 100 may include a cockpit 108 positioned at the front of the transportation vehicle 100, as well as a vertical stabilizer 110 and a horizontal stabilizer 112 positioned at the rear of the transportation vehicle 100. The vertical stabilizer 110 is configured to stabilize the transportation vehicle's 100 yaw (e.g., ability to turn left or right) and includes a rudder. The horizontal stabilizer 112 is configured to stabilize the transportation vehicle's 100 pitch (e.g., ability to tilt up or down). The transportation vehicle 100 may include a propeller 114 and/or an engine to generate thrust to propel the transportation vehicle 100 forward. The transportation vehicle 100 is not limited to the aircraft depicted in FIGS. 1-2, and may include any suitable transportation vehicle 100 including, but not limited to, a spacecraft (e.g., any vehicle designed to travel in outer space, such as satellite, cargo spacecraft, space probe, space telescope, lander, space capsule, space plane, space shuttle), a marine craft (e.g., any vehicle designed for travel across or through water, such as a boat, ship, hovercraft, submersible or submarine), a land vehicle (e.g., any vehicle designed for travel across land, such as an automobile, truck, tractor, farm vehicle), a railcar, and the like.

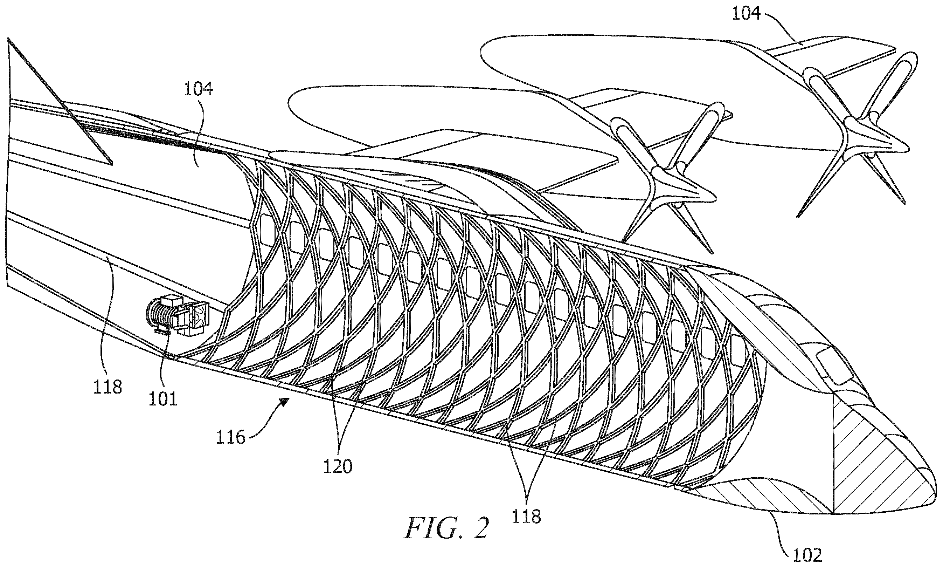

Referring to FIG. 2, the transportation vehicle 100 may include a battery assembly 116. The battery assembly 116 may be coupled to the interior surface 104 of the vehicle body 102. In some embodiments, the battery assembly 116 includes a plurality of stiffener assemblies 118 coupled to the interior surface 104 of the vehicle body 102. The stiffener assemblies 118 may be configured to extend along the interior surface 104 of the vehicle body 102 such that at least a portion of the stiffener assemblies 118 intersect at a plurality of intersection node assemblies 120.

In some embodiments, at least one of the stiffener assemblies 118 are arranged in a cylindrical geometry. For example, a first portion of the stiffener assemblies 118 may be configured to helically extend along the interior surface 104 of the vehicle body 102 in a clockwise direction, and a second portion of the stiffener assemblies 118 may be configured to helically extend in a counterclockwise direction. The first portion of stiffener assemblies 118 extending in the clockwise direction are configured to intersect with the second portion of stiffener assemblies 118 extending in the counterclockwise direction at the intersection node assemblies 120. In this way, at least a portion of the stiffener assemblies 118 are coupled to the interior surface 104 of the transportation vehicle 100 in an anisogrid lattice configuration, where the stiffener assemblies 118 extending in counterclockwise and clockwise directions intersect at the intersection node assemblies 120. In some embodiments, the battery assembly 116 includes a third portion of stiffener assemblies 118 that are arranged in a linear geometry. The third portion of stiffener assemblies 118 may be coupled to the cylindrical geometry and may extend toward the rear end of the vehicle body 102 (e.g., aft of the aircraft).

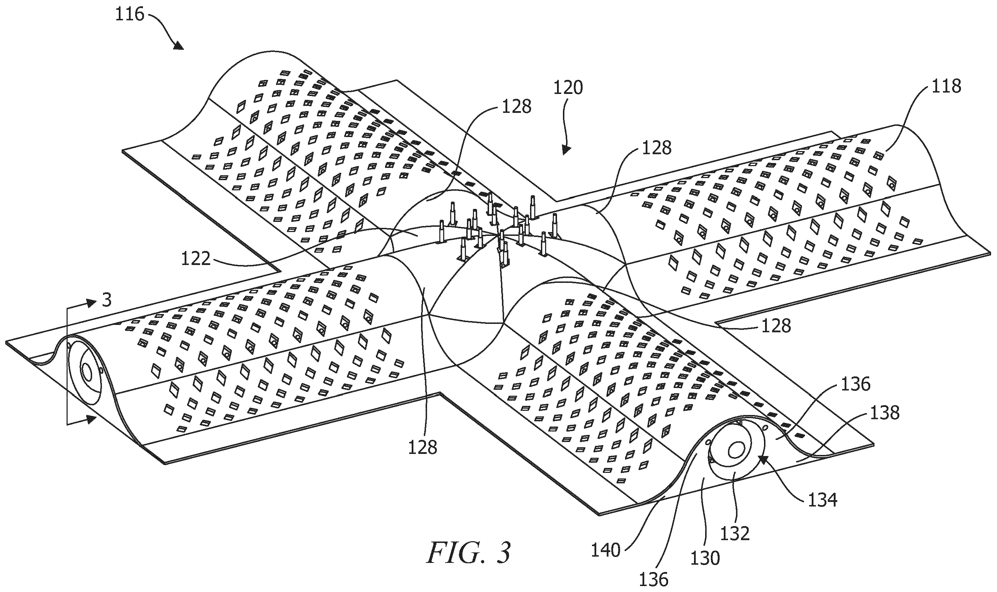

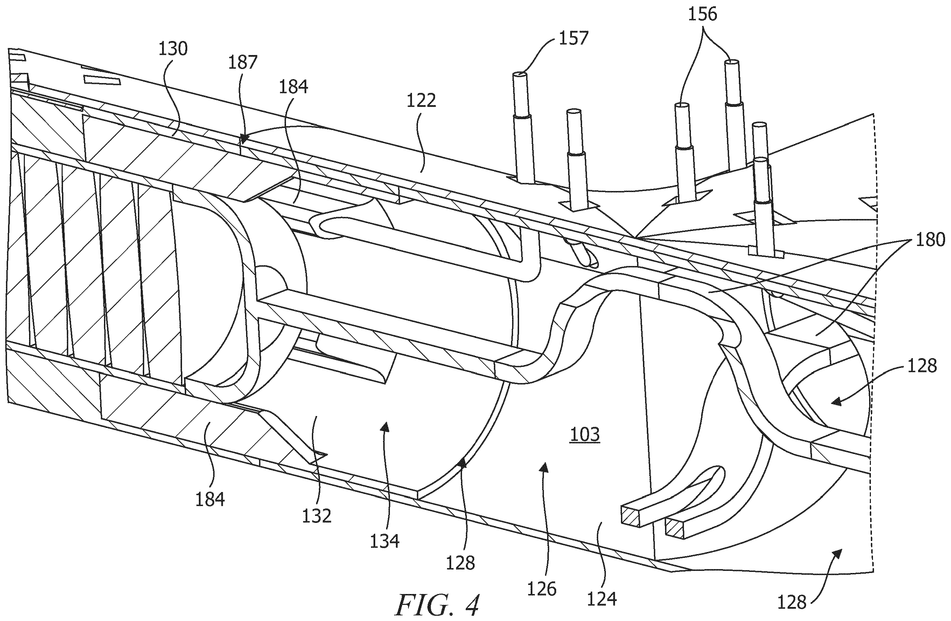

Referring to FIGS. 3, the intersection node assemblies 120 comprise an intersection node body 122. The intersection node body 122 includes an inner surface 124 that forms a hollow interior 126 inside of the intersection node body 122. As shown in FIG. 4, the intersection node body 122 includes a plurality of openings 128 in the intersection node body 122 that are in fluid communication with the hollow interior 126. The battery assembly 116 includes stiffener assemblies 118 that intersect at each of the respective intersection node assemblies 120. In some embodiments, the stiffener assemblies 118 comprise a stiffener body 130. The stiffener body 130 has an inner surface 132 that forms a hollow channel 134 through the stiffener body 130. In some embodiments, the hollow channel 134 of the stiffener body 130 is in fluid communication with a particular opening 128 in the intersection node body 122 such that the hollow channel 134 is placed in fluid communication with the hollow interior 126 of the intersection node body 122. In some embodiments, at least a portion of the stiffener bodies 130 in the battery assembly 116 extend between two adjacent intersection node assemblies 120 in the battery assembly 116. FIG. 4 also depicts a cathode lead wire 156, an anode lead wire 157, a plurality of connector bars 180, and a plurality of rails, which will be described in further detail below.

In some embodiments, referring to FIG. 3, an upper portion of the stiffener body 130 comprises a cylindrical geometry. The cylindrical geometry may comprise edges 136 that taper downward from the upper portion to a lower portion of the stiffener body 130. The edges 136 taper downward to form a first support base 138 on a first side of the stiffener body 130 and a second support base 140 on an opposing side of the stiffener body 130. The stiffener body 130 may be coupled to the interior surface 104 of the transportation vehicle 100. In one embodiment, the interior surface 104 of the transportation vehicle 100 is a thermoset or thermoplastic composite material and the stiffener body 130 may be an electrically-insulative material (e.g., polyetherimide). In some embodiments, the stiffener body 130 is thermally bonded to the interior surface 104, and may be directly coupled to the interior surface 104. In some embodiments, the stiffener body 130 is manufactured using automated fiber placement and compression rollers.

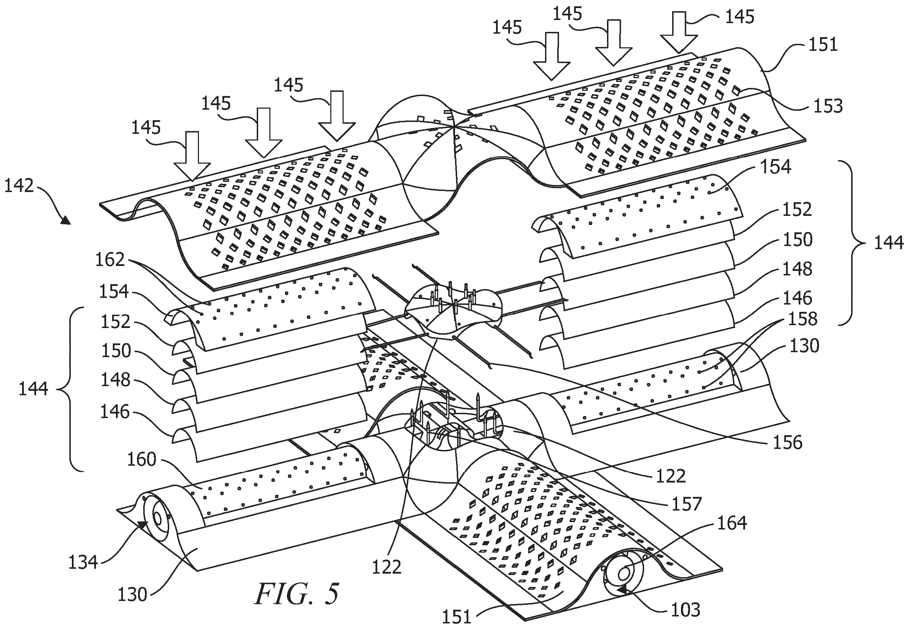

FIG. 5 illustrates a partially exploded view of the battery assembly 116 from FIG. 3. As shown in FIG. 5, the battery assembly 116 may comprise at least one battery 142 (e.g., at least one electrochemical cell). In some embodiments, the at least one battery 142 comprises a metal-air battery. In general, the metal-air battery comprises a cathode assembly 144, an anode assembly 164, and an electrolyte 103 configured to be in fluid communication with the hollow channel 134 of the stiffener body 130 and the hollow interior 126 of the intersection node body 122. When the at least one battery 142 is a metal-air battery, the transportation vehicle 100 may include a pump 101 (shown in FIG. 1) configured to circulate an electrolyte 103 through the hollow channel 134 of the stiffener bodies 130 and through the hollow interior 126 of the intersection node bodies 122.

The electrolyte 103 may be an alkaline aqueous solution. The electrolyte 103 may include, but is not limited to, sodium hydroxide or potassium hydroxide. The electrolyte 103 may contain an additive (e.g., an anti-corrosion additive), which may include, but is not limited to, zinc oxides, tin oxides, ethylene glycol, sodium citrate, or combinations thereof. In some embodiments, during operation, the anode assembly 164 includes one or more metal anodes 174 (see FIG. 5) that change into ions in the electrolyte 103 and oxygen from the air 145 transforms into hydroxide ions at the cathode assembly 144. This process releases electrons that generate a current, which flows from the cathode assembly 144 to the anode 174 and can be used to power one or more operating systems (not shown) of the transportation vehicle 100.

The cathode assembly 144 may be positioned between the hollow channel 134 in the stiffener body 130 and air 145 that is external to the stiffener body 130. In some embodiments, the cathode assembly 144 may be a porous air electrode. For example, in some embodiments, the cathode assembly 144 comprises a gas diffusion layer 146, a catalyst layer 148, a current collector 150, a hydrophobic gas diffusion layer 152, and an end cap 154. The cathode assembly 144 may be air permeable such that air 145 external to the battery assembly 116 is allowed to permeate through each component in the cathode assembly 144 to contact the electrolyte 103 in the hollow channel 134 of the stiffener body 130.

In some embodiments, the gas diffusion layer 146 is the innermost layer in the cathode assembly 144, and the catalyst layer 148 is positioned between the gas diffusion layer 146 and the current collector 150. In some embodiments, the current collector 150 is positioned between the catalyst layer 148 and the hydrophobic gas diffusion layer 152. In some embodiments, the hydrophobic gas diffusion layer 152 is positioned between the current collector 150 and the end cap 154, where the end cap 154 is the outermost layer.

In some embodiments, the gas diffusion layer 146 is configured to allow air 145 external to the battery assembly 116 to flow through the gas diffusion layer 146. In some embodiments, the gas diffusion layer 146 comprises an air-permeable material that includes, but is not limited to, porous graphite or carbon cloth. In some embodiments, the gas diffusion layer 146 is also configured to allow the electrolyte 103 to flow from the hollow channel 134 of the stiffener body 130 to contact the catalyst layer 148. For example, the upper portion of the stiffener body 130 includes a plurality of holes 158 that allow the electrolyte 103 to flow from the hollow channel 134 of the stiffener body 130 through the holes 158 and gas diffusion layer 146 to contact the catalyst layer 148.

In some embodiments, the catalyst layer 148 is configured to catalyze an oxygen-evolution reaction (OER) and/or an oxygen-reduction reaction (ORR) in the metal-air battery. **In** some embodiments, the catalyst layer 148 includes a support and a catalyst. The support may be a carbonaceous material that includes, but is not limited to, porous graphite or carbon cloth. The support material may include the catalyst dispersed throughout the support. The catalyst may include, but is not limited to, platinum (e.g., nanoparticle platinum), palladium, gold, silver, carbon black, or combinations thereof.

In some embodiments, the current collector 150 is configured to connect to a cathode lead wire 156 and transmit electrons therebetween during operation. The cathode lead wire 156 may be connected to a power source (not shown). The cathode lead wire 156 connected to the current collector 150 may be routed through holes 158 positioned in a top portion of the intersection node body 122. The casing of the cathode lead wires 156 may be bonded to the holes 158 to create a water-resistant seal that is configured to prevent the electrolyte 103 from leaking through the holes 158. In some embodiments, the current collector 150 is a conductive mesh material, conductive perforated sheet, porous graphite, carbon cloth, or combinations thereof. The conductive mesh material or conductive perforator sheet may comprise nickel, copper, stainless steel, or combinations thereof.

In some embodiments, the hydrophobic gas diffusion layer 152 is configured to allow air 145 external to the battery assembly 116 to flow through the hydrophobic gas diffusion layer 152. The hydrophobic gas diffusion layer 152 comprises an air-permeable material that includes, but is not limited to, porous graphite or carbon cloth. The hydrophobic gas diffusion layer 152 further comprises a hydrophobic binder (e.g., polytetrafluorethylene). The hydrophobic binder is configured to inhibit, or otherwise prevent, the electrolyte 103 from leaking through the hydrophobic gas diffusion layer 152. In this way, the hydrophobic gas diffusion layer 152 is configured to contain the electrolyte 103 inside the battery assembly 116 but allow air 145 external to the battery assembly 116 to flow through the cathode assembly 144.

In some embodiments, the upper portion of the stiffener body 130 includes a recessed trench 160 that is configured to receive the cathode assembly 144. The recessed trench 160 may include side walls that extend downward from the upper portion of the stiffener body 130 to a bottom surface of the recessed trench 160. The side walls and bottom surface of the recessed trench 160 may be sized to receive the cathode assembly 144. The recessed trench 160 may include the holes 158. In some embodiments, when the end cap 154 is assembled over the hydrophobic gas diffusion layer 152, the end cap 154 may be flush or approximately flush with a top edge of the recessed trench 160 at the upper portion of the stiffener body 130. The end cap 154 may include a plurality of holes 162 that allow air 145 external to the end cap 154 to pass through the end cap 154 to the layers below in the cathode assembly 144. In some embodiments, the gas diffusion layer 146, the catalyst layer 148, the current collector 150, and the hydrophobic gas diffusion layer 152 of the cathode assembly 144 can be combined and laminated prior to coupling (e.g., bonding) to the recessed trench 160 of the stiffener body 130.

In some embodiments, the battery assembly 116 may include a stiffener overwrap 151 that is configured to be overlaid on top of the stiffener assemblies 118 and the intersection node assembly 120. In some embodiments, the stiffener overwrap 151 may be contoured to match a top surface of the stiffener assemblies 118 and the intersection node assembly 120. In some embodiments, stiffener overwrap 151 includes holes 153 that are configured to allow the air 145 external to the battery assembly 116 to pass through the holes 153 and be placed in fluid communication with the cathode assembly 144. The stiffener overwrap 151 may be configured over the cathode assembly 144 such that the cathode assembly 144 is secured within the trench 160. In some embodiments, at least a portion (e.g., edges) of the stiffener overwrap 151 may be coupled (e.g., thermally bonded or welded) to the interior surface 104 of the transportation vehicle 100. In some embodiments, automated fiber placement (AFP) is performed over the top of the battery assembly 116 and a tow width is designed to minimize a clearance around the holes 153. The AFP layup may create its own sparse, anisogrid lattice pattern over the composite stiffener overwrap 151 that is configured to keep clear of the holes 153. This may result in cost savings where composite material may be avoided in lower stressed areas of the stiffener assembly 118.

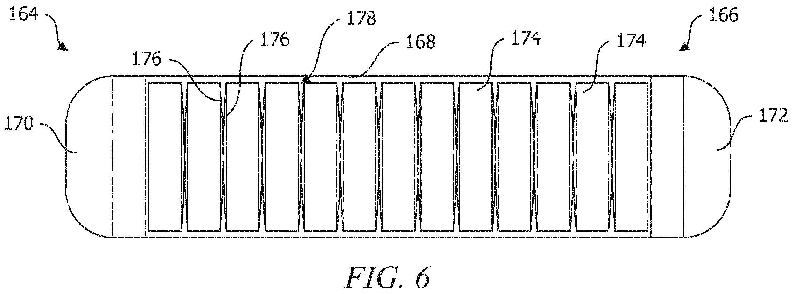

Referring to FIGS. 4-6, the anode assembly 164 may be positioned within the hollow channel 134 of the stiffener body 130. The anode assembly 164 may comprise a housing 166 that includes a housing body 168. The housing body 168 may be positioned between a first end cap 170 and a second end cap 172. The anode assembly 164 includes at least one anode 174 positioned within the housing body 168.

In some embodiments, the at least one anode 174 may include a metal anode. The metal anode may include , but is not limited to, zinc, aluminum, magnesium, iron, or lithium. The anode 174 may be arranged in a shape within the housing body 168 that includes, but is not limited to, a plate, a sheet, a disc, a pellet, or a powder. In one non-limiting example, the anode assembly 164 may include a plurality of anodes 174, where at least a portion of the plurality of anodes 174 comprise a disc geometry that includes a conical taper 176 on each respective face of the disc geometry. In some embodiments, at least a portion of the anodes 174 are arranged in stacks with the disc geometry such that the conical tapers 176 on each face are arranged end-to-end to create a clearance 178 between adjacent anodes 174. The clearance 178 provides various advantages. First, the clearance 178 increases a surface area of the anode 174 to allow the electrolyte 103 to contact more exposed surfaces of the anode 174, thereby enhancing the electrochemical reactions at the anode 174. Second, the conical taper 176 and clearance 178 allows for the plurality of anodes 174 to bend and/or flex within the housing 166. This allows the housing 166 to bend and/or flex to accommodate embodiments where the stiffener body 130 is curved, such as the clockwise or counterclockwise helical portions illustrated in FIG. 2.

In some embodiments, the first end cap 170 and the second end cap 172 are composed of nickel, stainless steel, or a nickel-stainless steel alloy. The first end cap 170 and the second end cap 172 may be coupled (e.g., welded or bonded) to the housing body 168. The housing body 168 may be composed of a mesh sleeve or perforated metal that allows the electrolyte 103 to pass therethrough. In some embodiments, the housing body 168 comprises nickel, stainless steel, or nickel-stainless steel alloy. The first end cap 170 and the second end cap 172 may be further coupled to the plurality of anodes 174. For example, the first end cap 170 and the second end cap 172 may be welded or bonded to a respective end of the stack of anodes 174 in the housing body 168. The first end cap 170, the second end cap 172, and the housing body 168 are sized to fit within the hollow channel 134 of the stiffener body.

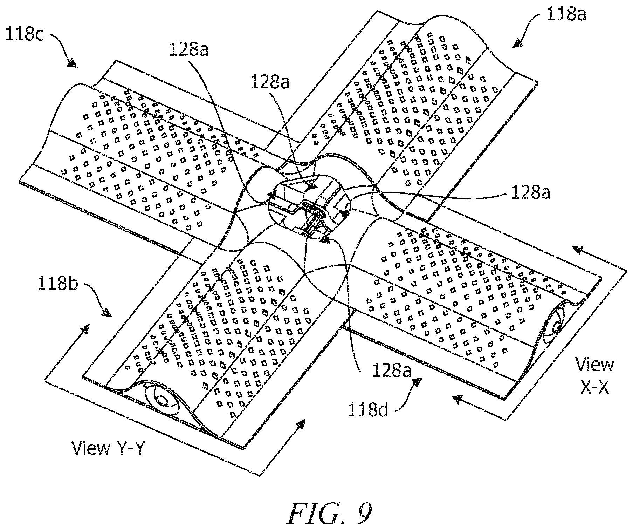

Referring to FIGS. 4 and 7-12, the battery assembly 116 may include a plurality of connector bars 180. When the battery assembly 116 is assembled, the connector bars 180 may be configured to extend through the intersection node body 122 to couple housings 166 between adjacent stiffener assemblies 118. For example, as shown in FIGS. 9-10, each of the intersection node bodies 122 may include a plurality of openings 128 (e.g., a first opening 128a, a second opening 128b, a third opening 128c, and a fourth opening 128d) that are in fluid communication with a respective hollow channel 134 (e.g., a first hollow channel 134a, a second hollow channel 134b, a third hollow channel 134c, and a fourth hollow channel 134d) of a plurality of stiffener assemblies (e.g., a first stiffener assembly 118a, a second stiffener assembly 118b, a third stiffener assembly 118c, and a fourth stiffener assembly 118d).

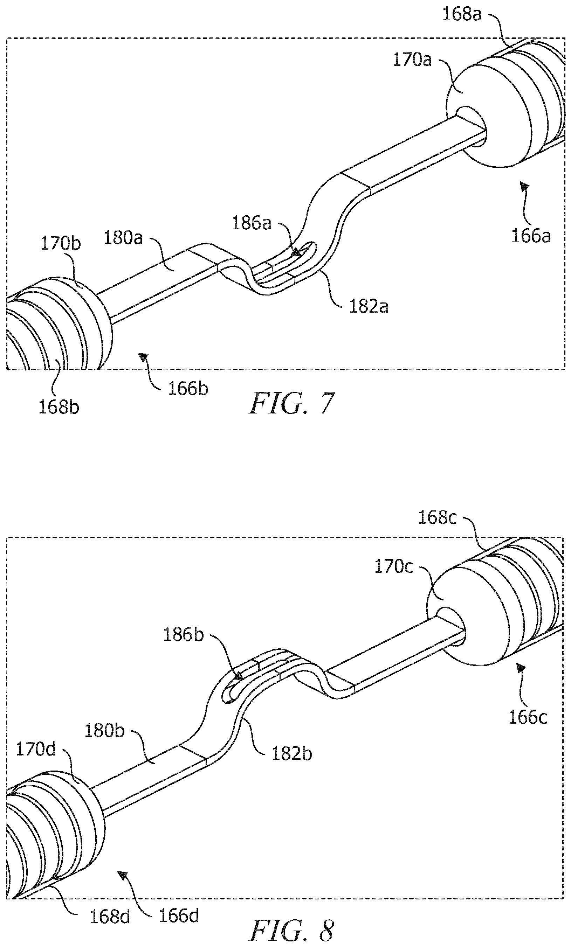

The first stiffener assembly 118a includes a first stiffener body 130a. The first stiffener body 130a has a first inner surface 132a that forms a first hollow channel 134a through the first stiffener body 130a. The first hollow channel 134a is in fluid communication with the first opening 128a of the intersection node body 122. The first stiffener assembly 118a includes a first housing 166a (shown in FIG. 7) that includes a first housing body 168a. The first housing 166a is positioned within the first hollow channel 134a of the first stiffener body 130a. The first housing body 168a includes at least a first end cap 170a coupled to a first connector bar 180a.

The second stiffener assembly 118b includes a second stiffener body 130b. The second stiffener body 130b has a second inner surface 132b that forms a second hollow channel 134b that extends through the second stiffener body 130b. The second hollow channel 134b is in fluid communication with the second opening 128b of the intersection node body 122. The second opening 128b may be positioned opposite the first opening 128a. The second stiffener assembly 118b includes a second housing 166b (shown in FIG. 7) that includes a second housing body 168b. The second housing 166b is positioned within the second hollow channel 134b of the second stiffener body 130b. The second housing body 168b includes at least a second end cap 170b coupled to the first connector bar 180a. The first connector bar 180a is configured to extend through the intersection node body 122, as shown in FIGS. 9-10.

The third stiffener assembly 118c includes a third stiffener body 130c. The third stiffener body 130c has a third inner surface 132c that forms a third hollow channel 134c that extends through the third stiffener body 130c. The third hollow channel 134c is in fluid communication with the third opening 128c of the intersection node body 122. In some embodiments, the third opening 128 is perpendicular or approximately perpendicular to the first opening 128a and the second opening 128b. The third stiffener assembly 118c includes a third housing 166c (shown in FIG. 8) that includes a third housing body 168c. The third housing 166c is positioned within the third hollow channel 134c. The third housing body 168c includes at least a third end cap 170c coupled to a second connector bar 180b.

The fourth stiffener assembly 118d includes a fourth stiffener body 130d. The fourth stiffener body 130d has a fourth inner surface 132d that forms a fourth hollow channel 134d that extends through the fourth stiffener body 130d. The fourth hollow channel 134d is in fluid communication with the fourth opening 128d of the intersection node body 122. The fourth opening 128d is perpendicular or approximately perpendicular to the first opening 128a and the second opening 128b. In some embodiments, the fourth opening 128d is positioned opposite the third opening 128c. The fourth stiffener assembly 118d includes a fourth housing 166d (shown in FIG. 8) that includes a fourth housing body 168d. The fourth housing 166d is positioned within the fourth hollow channel 134d. The fourth housing body 168d includes at least a fourth end cap 170d coupled to a second connector bar 180b.

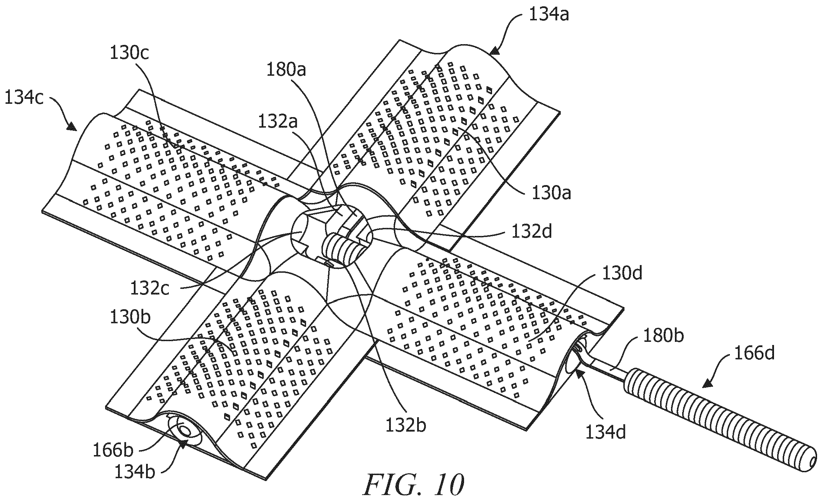

In some embodiments, the first connector bar 180a includes a first arched region 182a that extends toward a lower portion of the intersection node body 122, and the second connector bar 180b includes a second arched region 182b that extends towards an upper portion of the intersection node body 122. The first arched region 182a and the second arched region 182b may be configured to provide a relief bend feature that is sized such that the housings 166 can be pulled through the intersection node assembly 120 and the respective stiffener assembly 118 without getting stuck (e.g., FIG. 10 illustrates the third housing 166c, the fourth housing 166d, and the second connector bar 180b being pulled out of the battery assembly 116 without being obstructed by the first connector bar 180a due to the first arched region 182a). Although not shown in FIG. 10, the first housing 166a, the second housing 166b, and the first connector bar 180a can be pulled out of the battery assembly 116 in the same manner without being obstructed by the second connector bar 180b due to the second arched region 182b. The first arched region 182a may have a width that is greater than a width of the third housing 166c and greater than a width of the fourth housing 166d. The first arched region 182a includes a height that is greater than a radius of the third housing 166c and a radius of the fourth housing 166d. The second arched region 182b may include a width that is greater than a width of the first housing 166a and greater than a width of the second housing 166b. The second arched region 182b may include a height that is greater than a radius of the first housing 166a and greater than a radius of the second housing 166b.

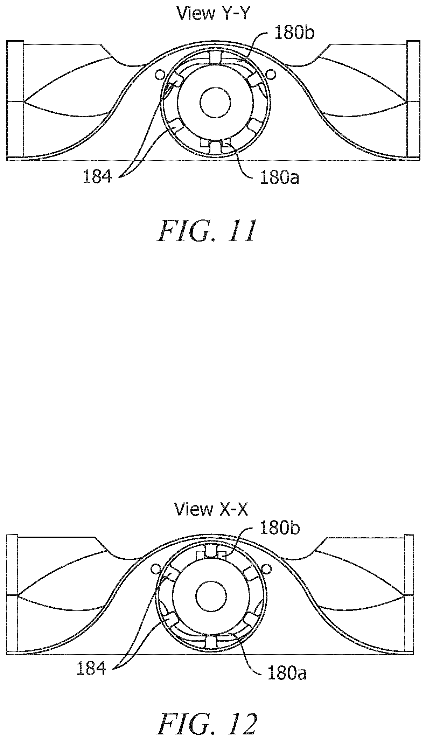

Referring to FIGS. 11-12, in some embodiments, the hollow channels 134 of the stiffener bodies 130 include a plurality of rails 184 that extend along the inner surface 132 of the stiffener bodies 130. The plurality of rails 184 are configured to be sliding guides that support the housings 166. For example, the housings 166 may be configured to slide along a top surface of the plurality of rails 184 within the stiffener bodies 130.

In some embodiments, the first arched region 182a of the first connector bar 180a includes a first slot 186a (shown in FIG. 7) that extends through at least a portion the first arched region 182a and is sized to receive a respective rail 184. Similarly, the second arched region 182b of the second connector bar 180b includes a second slot 186b (shown in FIG. 8) that extends at least through a portion of the second arched region 182b and is sized to receive a respective rail 184. The first slot 186a and second slot 186b may slide along the respective rail 184 in the stiffener bodies 130 to maintain an orientation of the connector bar 180 (e.g., orientated at 0 degrees, 60 degrees, 120 degrees, 180 degrees, etc) within the stiffener bodies 130. In this way, the plurality of rails 184 are configured to be sliding guides that maintain a rotational orientation of the first connector bar 180a, the second connector bar 180b, and the housings 166a-166d as these features traverse through the hollow channels 134. This assists with allowing the housings 166a-166d to be slidably removed without getting entangled in the intersection node bodies 122. Additionally, the gaps formed by the plurality of rails 184 allow electrolyte to flow around the anode assemblies 164 while also absorbing oxygen from air 145 coming into the stiffener bodies 130. In some embodiments, the housings 166 extending in the clockwise-orientated helical stiffener assemblies 118 are positioned 180 degrees (e.g., at 180 degrees) relative to the housings 166 extending in the counterclockwise-orientated helical stiffener assemblies 118 (e.g., at 0 degrees). This allows the housings 166 to not become entangled while passing through the intersection node body 122.

In some embodiments, referring back to FIG. 4, the rails 184 allow the first end cap 170 and the second end cap 172 for each of the housings 166 in the anode assembly 164 to be placed in electrical contact with an anode lead wire 157 that is connected to a power source (not shown). For example, the rails 184 may include a rail channel 185 that extends through the rails and is configured to receive the anode lead wire 157. The anode lead wire 157 may be routed through the holes 158 positioned in the top portion of the intersection node body 122. The casing of the anode lead wire 157 may be bonded to the holes 158 in the intersection node body 122 to create a water-resistant seal that is configured to prevent the electrolyte 103 from leaking through the holes 158. The rails 184 may be a separate piece of material from the inner surface 132 of the hollow channel 134, where the rails 184 are formed from a flexible metallic sheet with a bellows-like spring to the flexible metallic sheet. When the anode assembly 164 slides along the rails 184, he rails 184 may compress to provide electrical contact with the first end cap 170 and the second end cap 172. Alternatively, the rails 184 may be installed onto an elastic member (e.g., a spring) that provides compression to ensure the electrical contact.

Continuing to refer to FIG. 4, in some embodiments, the battery assembly 116 may include a hermetic seal 187 positioned at the coupling between the intersection node body 122 and the stiffener body 130. For example, during construction, a nickel or high-nickel stainless steel coupler may be press fit, formed, and/or thermoformed to fit tightly at the junction between the intersection node body 122 and the stiffener body 130. An induction coil, resistance heating element, ultrasonic sonotrode, or laser beam is directed into the inside of the nickel or high-nickel stainless steel coupler to heat it below its melting temperature, but slightly lower or at the glass transition temperature of the surrounding thermoplastic material. In the case of the laser beam welding method, a prism or set of mirrors may be placed at the bottom of the intersection node body 122 for the laser beam to access the full inner circumference of the coupler since it does not have a direct line of sight during assembly. The hermetic seal 187 may be created through a combination of mechanical interlocking of the thermoplastic onto the exterior surface of the metallic sleeve in addition to limited amount of chemical bonding. The coupler has at least some extension of the rail 184 profile from the stiffener assembly 118. The rails 184 may be designed with a chamfer to guide the anode assembly 164 and connector bars 180 to move more easily into successive cores when being installed and replaced. The hermetic seal 187 is advantageous is it mitigates, or otherwise prevents, the electrolyte 103 from leaking out of the battery assembly 116,

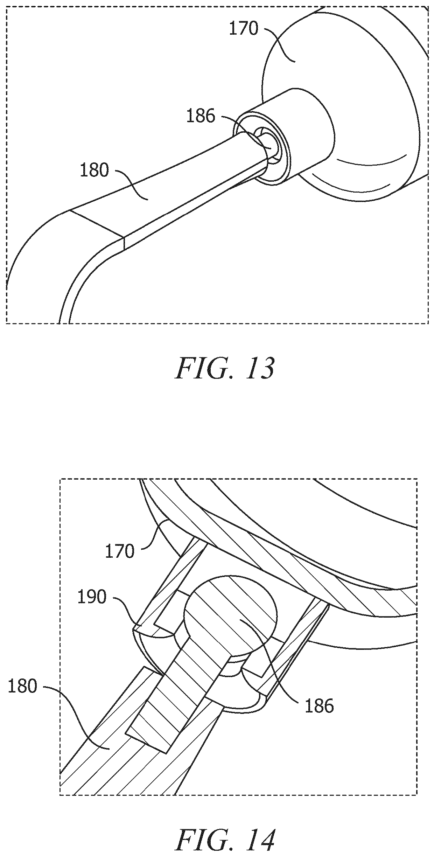

In some embodiments, it is advantageous to route the cathode lead 156 and the anode lead 157 through the top portion of the intersection node body 122 because it allows the battery 142 in each respective stiffener assembly 118 to be connected in parallel, series, or a combination of both. The connector bars 180 in the battery assembly 116 may serve as busbar connectors for arranging the anode assemblies 164 in series, which may be the negative side of the battery. In some embodiments, the connector bars 180 may be configured to electrically isolate anode assemblies 164 from each other. For example, FIGS. 13-14 show a ball and socket joint 186 that is coupled to the connector bar 180 and the first end cap 170. The ball and socket joint 186 may be encapsulated by an electrical-insulative material 188 integrated into the first end cap 170. In one embodiment, the electrical-insulative material 188 comprises silicon nitride. Silicon nitride may provide advantages since it has high tensile strength, toughness, and wear-resistance. In some embodiments, the first end cap 170 includes a ball and socket housing 190 that is a separate component from the first end cap 170. The ball and socket housing 190 is configured to house the electrical-insulative material 188 and the ball and socket joint 186. The ball and socket housing 190 may be coupled (e.g., welded or bonded) to the first end cap 170. In some embodiments, the ball and socket joint 186 is configured to pivot within the ball and socket housing 190, which may assist removing and inserting the housings 166 from the stiffener bodies 130. Furthermore, the electrical-insulative material 188 allows for the anode assemblies 164 to be wired in parallel as well as in series, as needed.

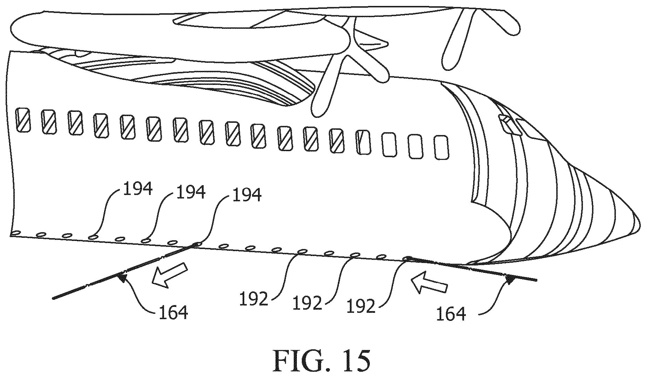

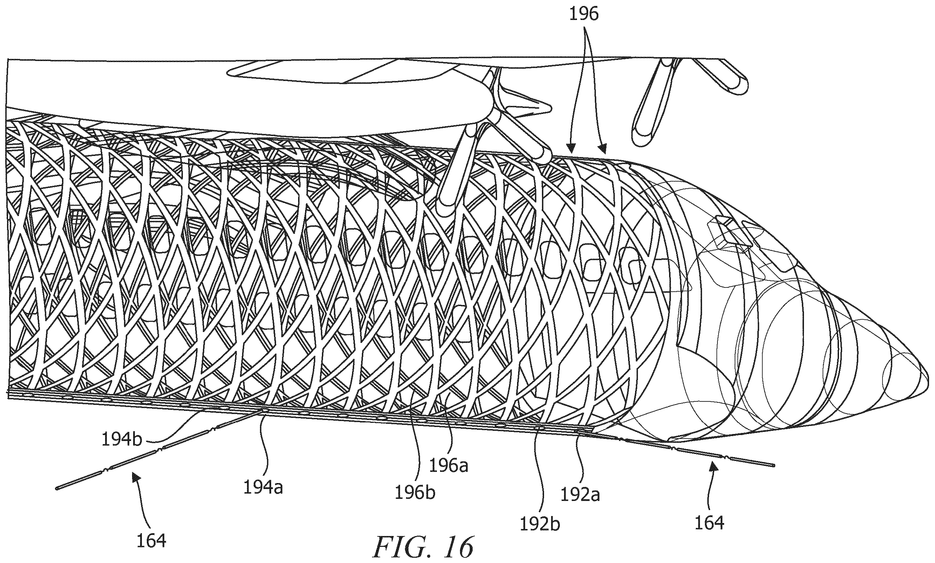

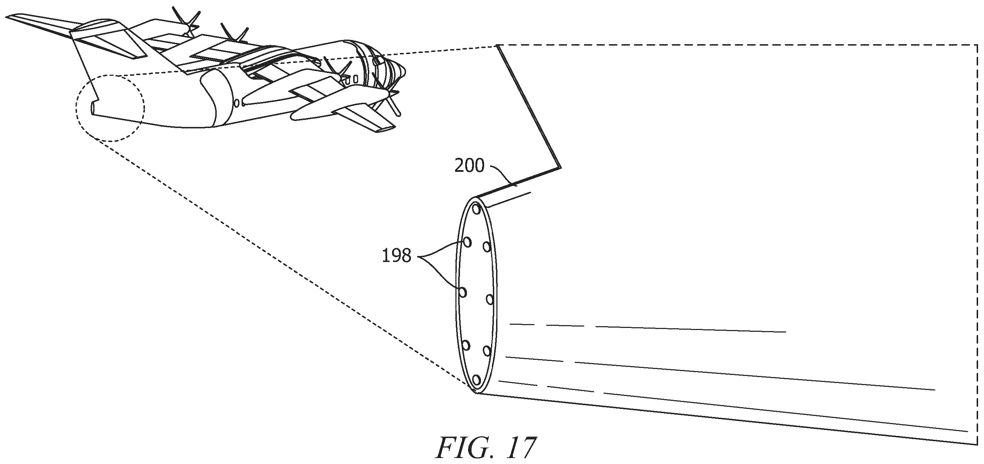

When the battery assembly 116 is configured for a metal-air battery, the anodes 174 are typically expended during discharge since most metal-air batteries are primary cell (e.g., not electrically rechargeable). However, the metal-air batteries are mechanically rechargeable in that the anodes 174 may be replaced after being partially or fully consumed. Referring to FIGS. 15-17, the transportation vehicle 100 may include a plurality of inlet access ports 192 for inserting the anode assembly 164 into the hollow channels 134 of the stiffener assemblies 118, and a plurality of outlet access ports 194 for removing the anode assembly 164 from the hollow channels 134. The inlet access ports 192 are sized to allow the one or more anode assemblies 164 to be inserted into the one or more hollow channels 134 via the inlet access ports 192, and the outlet access ports 194 are sized to allow the one or more anode assemblies 164 to be removed from the outlet access ports 194. The inlet access ports 192 and the outlet access ports 194 may be configured on a bottom or on a side of the transportation vehicle 100.

In one non-limiting example, ground support equipment for the transportation vehicle 100 is brought near the transportation vehicle 100 with spools of new anode assemblies 164. The new anode assemblies 164 may be attached to the expended anode assemblies 164 in the hollow channels 134 at an end that is exposed when an inlet access port 192 is removed. The new anode assemblies 164 may be attached to the expended anode assemblies 164 via a connector bar 180. As discussed above, a first portion of the stiffener assemblies 118 in the transportation vehicle 100 may be configured in a cylindrical geometry formed by helical loops 196 extending in clockwise and counterclockwise directions. Each of the helical loops 196 may be in fluid communication with a respective inlet access port 192 and a respective outlet access port 194. For example, FIG. 14 illustrates an example where the cylindrical geometry includes at least a first portion of stiffener assemblies 118 that are configured to extend along the cylindrical geometry in at least a first helical loop 196a. A first inlet access port 192a is in fluid communication with the hollow channels 134 of the stiffener assemblies 118 in the first helical loop 196a and a first outlet access port 194a is in fluid communication with the hollow channels 134 of the stiffener assemblies 118 in the first helical loop 196a.

To remove the expended anode assemblies 164 from the first helical loop 196a, a second piece of ground support equipment may attach a guide wire or cable to a connector bar 180 at the first outlet access port 194a in the first helical loop 196a. The guide wire or cable from the second piece of ground support may begin to pull the expended anode assembly 164 from the stiffener bodies 130 and spool the expended anode assembly 164 onto a reel. The new anode assembly 164 spooled on the reel of the first piece of group equipment begins to unspool and gets pulled into the stiffener bodies 130 via the first inlet access port 192a. Once the expended anode assembly 164 is fully removed by the second piece of group support equipment, the new anode assembly 164 will be installed in its place within the stiffener bodies 130. The expended anode assembly 164 is detached from the new anode assembly 164, and the process may be repeated for each of the helical loops 196 in the transportation vehicle 100. For example, the process may be repeated for a second helical loop 196b in the cylindrical geometry. A second inlet access port 192b is in fluid communication with the hollow channels 134 of the stiffener assemblies 118 in the second helical loop 196b and a second outlet access port 194b is in fluid communication with the hollow channels 134 of the stiffener assemblies 118 in the second helical loop 196b.

As discussed above, the third portion of stiffener assemblies 118 may be arranged in a linear geometry. The third portion of stiffener assemblies 118 may be coupled to the cylindrical geometry and may extend toward the rear end of the transportation vehicle 100 (e.g., aft of the aircraft). The anodes 174 contained within the linear geometry in the tail cone of the transportation vehicle 100 may be removed by an alternative method. For example, the transportation vehicle may include rear access ports 198 configured in a rear tail cone 200 of the transportation vehicle 100. To remove, the anode assemblies 164 from the linear geometry in the rear tail cone 200, a third piece of ground support equipment may be configured to elevate workers or robotic manipulators to the proper height. The rear access ports 198 may have a cover that is removed and the expended anode assemblies 164 are pulled out and set aside. The new anode assemblies 164 are installed one-by-one into the linear geometries from the rear tail cone 200.

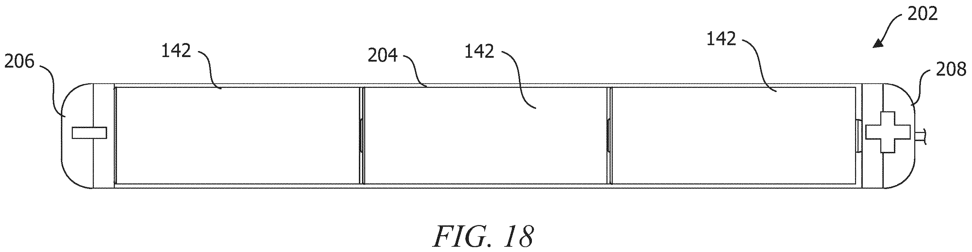

As discussed above, in alternative embodiments, the at least one battery 142 in the stiffener assemblies 118 may be a rechargeable battery. For example, as shown in FIGS. 18-20, the battery assembly 116 may include a housing 202 positioned within the hollow channel 134 of the stiffener body 130. The housing 202 may include a housing body 204 positioned between a first end cap 206 and a second end cap 208. The housing 202 may comprise the one or more battery 142. For example, each of the batteries 142 may be a rechargeable battery positioned between the first end cap 206 and the second end cap 208. In some embodiments, the battery 142 is a rechargeable battery that includes, but is not limited to, the lithium-ion batteries, lithium-gas batteries, lithium-sulfur batteries, aluminum-ion batteries, or combinations thereof. In some specific, non-limiting examples, the rechargeable battery is a Panasonic 2170 battery or South 8 Technologies lithium-gas cell. The rechargeable battery may be arranged end-to-end (e.g., in mini packs) that are encapsulated within the housing body 204. In some embodiments, the housing body 204 is a perforated or mesh sleeve that can be non-conductive (e.g., fiberglass) or partially conductive (e.g., fiberglass with embedded metallic leads attaching to the first end cap 206 or the second end cap 208).

In some embodiments, a non-conductive housing body 204 may be used when the rechargeable batteries are configured in series (e.g., each battery 142 is connected end-to-end where a positive terminal contacts a negative terminal in a successive battery 142). For example, the first end cap 206 may be a negative terminal and the second end cap 208 may be a positive terminal. Lead wires 156, 157 may be coupled to respective ends of the housing body 204 and coupled to the power source.

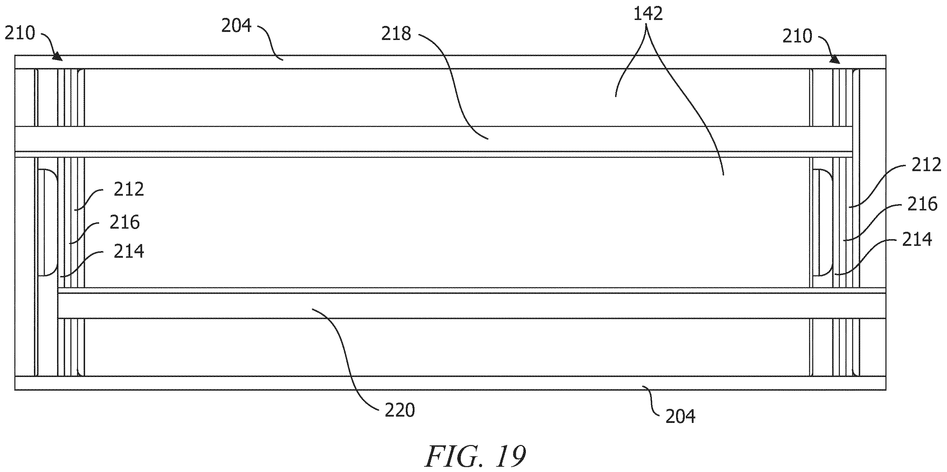

In some embodiments, a partially conductive housing body 204 may be used when the batteries 142 are arranged in parallel. Referring to FIG. 19, when the batteries 142 are in a parallel configuration, the housing 202 may include separators 210 placed between each respective battery 142 in the housing body 204. Each separator 210 may include a negative tab 212, a positive tab 214, and an insulator 216 positioned between the negative tab 212 and the positive tab 214. The negative tab 212 and the positive tab 214 may be any suitable conductive material and the insulator 216 may be any suitable non-conductive material. The positive terminal of each respective battery 142 is configured to contact the positive tab 214 of the respective separator 210, and the negative terminal of each respective battery 142 is configured to contact the negative tab 212 of the respective separator 210. The housing body 204 includes a negative busbar 218 composed of a conductive material that is configured to contact each of the negative tabs 212, but is configured to not contact the positive tabs 214. The housing body 204 includes a positive busbar 220 composed of a conductive material that is configured to contact each of the positive tabs 214, but is configured to not contact the negative tabs 212. In some embodiments the negative busbar 218 is welded to the negative tabs 212, and the positive busbar 220 is welded to the positive tabs 214.

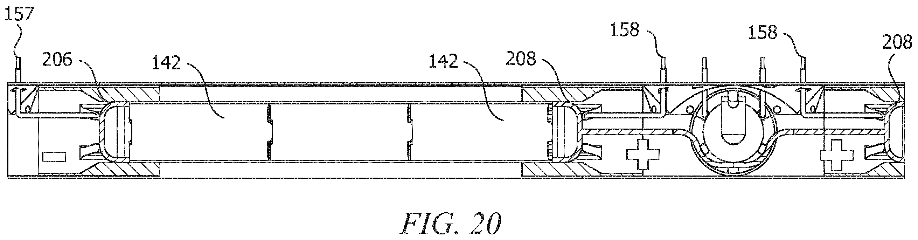

Referring to FIG. 20, the first end cap 206 (e.g., negative end cap) may contact the negative terminal of outermost battery 142 on one end of the housing body 204, and the second end cap 208 (e.g., positive end cap) may contact the outermost battery on the other end of the housing. The first end cap 206 and the second end cap 208 may be composed of a conductive material. The first end cap 206 may be coupled to the negative lead wires 157 and the second end cap 208 may be coupled to positive lead wires 156. In some embodiments, the connector bar 180 may be configured in the intersection node body 122 to connect two positive end caps. A positive lead wire 156 may be connected to the second end cap 208, and the negative lead wire 157 may be connected to the first end cap 206. The positive lead wire 156 and the negative lead wire 157 may be connected with their respective polarity leads from other cells in the battery assembly 116 to achieve the desired number of batteries 142 in parallel. When the battery 142 is a rechargeable battery, the pump 101 may be configured to circulate a fluid through the hollow channels 134 and the hollow interior 126 of the intersection node body 122. The fluid may be a coolant (e.g., water-glycol mixture). In an alternative embodiment, a fan may be configured to circulate air 145 through the hollow channels 134 and the hollow interior 126 of the intersection node body 122.

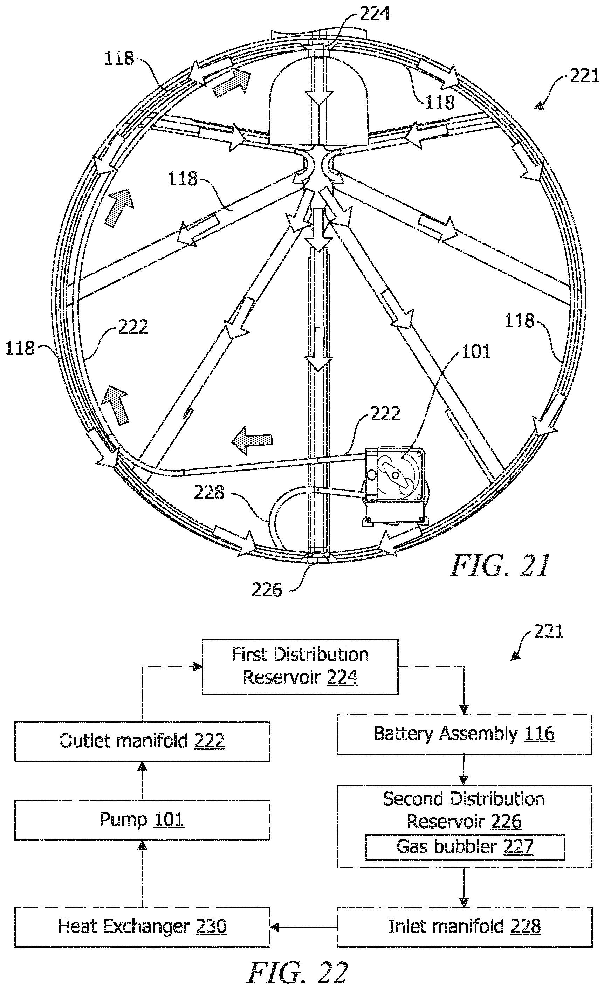

Referring to FIGS. 2 and 21-22, the transportation vehicle 100 may include a pumping circuit 221 to transport a fluid through the battery assembly 116. The pumping circuit 221 may include a pump 101 that is configured to circulate a fluid through the battery assembly 116. As discussed above, when the one or more battery 142 comprises a metal-air battery, the fluid may comprise an electrolyte 103. In alternative embodiments, when the one or more battery 142 is a rechargeable battery, the fluid may comprise a coolant (e.g., water-glycol mixture).

In some embodiments, the pump 101 has an outlet that is coupled to an inlet of an outlet manifold 222. The outlet manifold 22 is configured to receive the fluid exiting the pump 101, and is configured to place the outlet of the pump 101 in fluid communication with at least one inlet of a first distribution reservoir 224. As discussed above in FIG. 2, a portion of the battery assembly 116 may be configured in the cylindrical geometry within the transportation vehicle 100. The first distribution reservoir 224 may be positioned in an upper portion of the cylindrical geometry of the battery assemblies 116. **In** some embodiments, the first distribution reservoir 224 is a linear distribution reservoir that extends along an apex of the cylindrical geometry. The first distribution reservoir 224 includes at least one outlet that places the first distribution reservoir 224 in fluid communication with at least one of the hollow channels 134 of the plurality of stiffener assemblies 118. The fluid may be configured to flow from the first distribution reservoir 224 down to the one or more hollow channels 134 and the hollow interior 126 of the intersection node bodies 122. In some embodiments, the first distribution reservoir 224 may extend along the length of the cylindrical geometry of the battery assembly 116. By positioning the first distribution reservoir in the upper portion or at the top of the cylindrical geometry, the fluid flows down towards the lowest point in the transportation vehicle 100. The fluid may flow into the stiffener assemblies 118 arranged in the linear geometry, which are coupled to the cylindrical geometry. That is, the fluid flows into the linear stiffener assemblies 118 that have a positive pressure head, and the fluid may be routed towards a bottom portion of the transportation vehicle.

**In** some embodiments, the pumping circuit 221 includes a second distribution reservoir 226 that includes at least one inlet configured to receive the fluid from the stiffener assemblies 118 in the battery assembly 116. The second distribution reservoir 226 may be positioned in a bottom portion of the cylindrical geometry of the battery assembly 116. **In** some embodiments, the second distribution reservoir 226 is positioned at a bottom of the cylindrical geometry, such that the fluid flows down from the first distribution reservoir 224, through the battery assembly 116, and to the second distribution reservoir 226. In some embodiments, the second distribution reservoir 226 includes a gas bubbler 227 (e.g., air or oxygen) that is configured to dispense the gas from the second distribution reservoir 226 upwards through the pumping circuit 221. That is the buoyancy the gas allow the gas to flow against the downward current of the fluid, such that the gas may flow upwards through the pumping circuit 221. The gas may be collected, separated, and/or recaptured at the first distribution reservoir 224 through one or more outlet in the first distribution reservoir 224. The addition of the gas can improve the electrochemical reactions and help remove the byproducts (e.g., hydrogen gas) as well as break up aluminum hydroxide deposits.

In some embodiments, the pumping circuit 221 includes an inlet manifold 228 configured to place at least one of the hollow channels 134 of the stiffener assemblies 118 in fluid communication with an inlet to the pump 101 such that the fluid may be transferred from the second distribution reservoir 226 to the pump 101 via the inlet manifold 228. In some embodiments, the pumping circuit 221 may optionally include a heat exchanger 230 positioned between the second distribution reservoir 226 and the pump 101. The heat exchanger 230 may be configured to cool the fluid by exchanging heat with a coolant. For example, when the battery 142 is a rechargeable battery, it may be desirable to circulate a coolant through the hollow channels 134 of the stiffener assemblies 118. The heat exchanger 230 may cool the coolant prior to circulating through the stiffener assemblies 118. When the pumping circuit 221 includes the heat exchanger 230, the inlet manifold 228 may be configured to place the second distribution reservoir 226 in fluid communication with the heat exchanger 230 and the heat exchanger 230 in fluid communication with the pump 101.

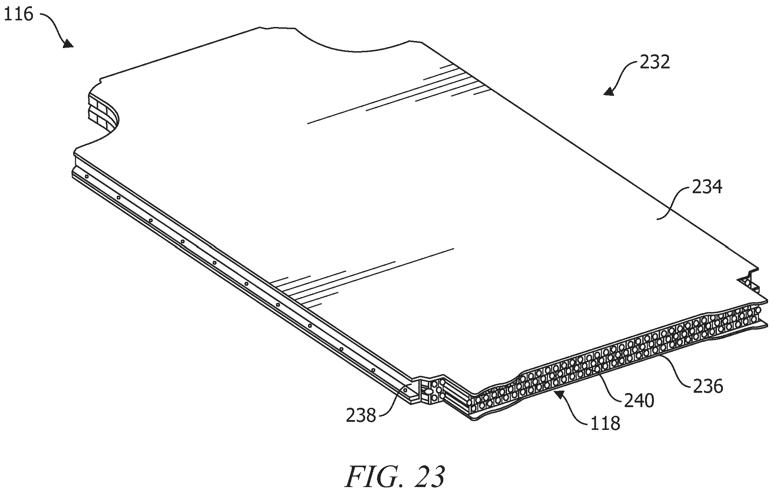

FIG. 23 illustrates a battery assembly 116 positioned within a transportation vehicle 100 according to another embodiment of the present disclosure. In this illustrative example, the transportation vehicle 100 includes a frame assembly 232 comprising a first panel 234 and a second panel 236. The interior surface 104 of the transportation vehicle 100 includes a first interior surface 238 of the first panel 234 and a second interior surface 240 of the second panel 236. The frame assembly 232 may include a plurality of stiffener assemblies 118 that are coupled to the first interior surface 238 and the second interior surface 240 of the frame assembly 232. In one non-limiting example, the frame assembly 232 may be used in an automobile chassis or lunar lander (e.g., deck, landing leg, and off-loading ramp of lunar lander) that is configured to store a plurality of stiffener assemblies that comprise the one or more battery 142, as described herein. In the case of the lunar lander, the anode assemblies 164 may be replaced with new anode assemblies 164 via in situ resource utilization (ISRU) since regolith contains aluminum and iron. The electrolyte 103 can also be replenished with water or oxygen excavated from ice.

While several embodiments have been provided in the present disclosure, it should be understood that the disclosed systems and methods might be embodied in many other specific forms without departing from the spirit or scope of the present disclosure. The present examples are to be considered as illustrative and not restrictive, and the intention is not to be limited to the details given herein. For example, the various elements or components may be combined or integrated with another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the spirit and scope disclosed herein.

The following clauses define further aspects of the invention
1. A battery assembly for a transportation vehicle, the battery assembly comprising:
   an intersection node assembly comprising:
      an intersection node body;
      an inner surface of the intersection node body that forms a hollow interior;
      a plurality of openings in the intersection node body, wherein the plurality of openings are in fluid communication with the hollow interior,
   a plurality of stiffener assemblies, wherein at least one of the plurality of stiffener assemblies comprise:
      a stiffener body;
      an inner surface of the stiffener body that forms a hollow channel through the stiffener body, wherein the hollow channel is in fluid communication with a particular opening in the plurality of openings of the intersection node body; and
      at least one battery.
2. The battery assembly of 1, wherein an upper portion of the stiffener body comprises a cylindrical geometry, wherein the cylindrical geometry comprises edges that taper downward from the upper portion to a lower portion of the stiffener body, and wherein the edges taper downward to form a first support base on a side of the stiffener body and a second support base on an opposing side of the stiffener body.
3. The battery assembly of 1, wherein the at least one battery further comprises:
   a cathode assembly positioned between the hollow channel in the stiffener body and air external to the stiffener body, the cathode assembly comprising:
      a hydrophobic gas diffusion layer;
      a catalyst layer;
      a current collector layer;
   an anode assembly positioned within the hollow channel of the stiffener body, the anode assembly comprising:
      a housing that includes a housing body positioned between a first end cap and a second end cap, wherein the housing body is porous and configured to allow an electrolyte to pass through the housing body; and
      at least one anode positioned within the housing body.
4. The battery assembly of 3, wherein an upper portion of the stiffener body comprises a plurality of holes configured to allow an electrolyte to flow from the hollow channel in the stiffener body through the plurality of holes to contact the catalyst layer.
5. The battery assembly of 4, wherein the anode assembly comprises a plurality of anodes positioned within the housing body; and
   wherein at least a portion of the plurality of anodes comprise a disc geometry, wherein the disc geometry includes a conical taper on each face of the disc geometry.
6. The battery assembly of 1, wherein the stiffener body further comprises:
   a housing positioned within the hollow channel of the stiffener body, wherein the housing comprises a housing body positioned between a first end cap and a second end cap, wherein the housing comprises:
   the at least one battery, wherein the at least one battery comprises at least one rechargeable battery positioned between the first end cap and the second end cap.
7. The battery assembly of 1, wherein the plurality of openings in the intersection node body comprises a first opening and a second opening; and
   wherein the plurality of stiffener assemblies comprise:
   a first stiffener assembly comprising:
      a first stiffener body;
      a first inner surface of the first stiffener body that forms a first hollow channel through the first stiffener body, wherein the first hollow channel is in fluid communication with the first opening in the intersection node body;
      a first housing that includes a first housing body, the first housing positioned in the first hollow channel, the first housing body coupled to at least a first end cap;
   a second stiffener assembly comprising:
      a second stiffener body;
      a second inner surface of the second stiffener body that forms a second hollow channel through the second stiffener body, wherein the second hollow channel is in fluid communication with the second opening in the intersection node body;
      a second housing that includes a second housing body, the second housing body coupled to at least a second end cap; and
   a first connector bar that couples the first end cap of the first stiffener assembly to the second end cap of the second stiffener assembly, wherein the first connector bar extends through the intersection node body.
8. The battery assembly of 7, wherein the plurality of openings in the intersection node body further comprise a third opening and a fourth opening; and
   wherein the plurality of stiffener assemblies further comprise:
   a third stiffener assembly comprising:
      a third stiffener body;
      a third inner surface of the third stiffener body that forms a third hollow channel through the third stiffener body, wherein the third hollow channel is in fluid communication with the third opening in the intersection node body;
      a third housing that includes a third housing body, the third housing body coupled to at least a third end cap;
   a fourth stiffener assembly comprising:
      a fourth stiffener body;
      a fourth inner surface of the fourth stiffener body that forms a fourth hollow channel through the second stiffener body, wherein the fourth hollow channel is in fluid communication with the fourth opening in the intersection node body;
      a fourth housing that includes a fourth housing body, the fourth housing body coupled to at least a fourth end cap; and
   a second connector bar that couples the third end cap of the third stiffener assembly to the fourth end cap of the fourth stiffener assembly, wherein the first connector bar extends through the intersection node body.
9. The battery assembly of 8, wherein the first connector bar includes a first arched region that extends towards an upper portion of the intersection node body, wherein at least a portion of the first arched region includes a width that is greater than a width of the first housing and a width of the second housing; and
   wherein the second connector bar includes a second arched region that extends towards a lower portion of the intersection node body, and wherein at least a portion of the second arched region includes a width that is greater than a width of the third housing and a width of the fourth housing.
10. The battery assembly of 1, wherein each stiffener assembly in the plurality of stiffener assemblies further comprises:
   a housing that includes a housing body positioned between a first end cap and a second end cap; and
   a plurality of rails that extend along the inner surface of the stiffener body, and wherein the housing is configured to slide along a top surface of the plurality of rails within the stiffener body.
11. A transportation vehicle comprising:
   a vehicle body, the vehicle body comprising an interior surface;
   a plurality of stiffener assemblies coupled to the interior surface of the vehicle body;
   a plurality of intersection node assemblies coupled to the interior surface of the vehicle body, wherein the plurality of stiffener assemblies are configured to extend along the interior surface of the vehicle body and intersect at the plurality of intersection node assemblies;
   wherein at least one of the plurality of intersection node assemblies comprises:
      an intersection node body;
      an inner surface of the intersection node body that forms a hollow interior;
      a plurality of openings in the intersection node body, wherein the plurality of openings are in fluid communication with the hollow interior, and
   wherein at least one of the plurality of stiffener assemblies comprises:
      a stiffener body;
      an inner surface of the stiffener body that forms a hollow channel through the stiffener body, wherein the hollow channel is in fluid communication with a particular opening in the plurality of openings of the intersection node body; and
      at least one battery.
12. The transportation vehicle of 11, wherein a first portion of the plurality of stiffener assemblies are configured to helically extend along the interior surface of the vehicle body in a clockwise direction;
   wherein a second portion of the plurality of stiffener assemblies are configured to helically extend along the interior surface of the vehicle body in a counterclockwise direction, and
   wherein the first portion and the second portion of the plurality of stiffener assemblies are configured to intersect at the plurality of intersection node assemblies.
13. The transportation vehicle of 11, wherein an upper portion of the stiffener body comprises a plurality of holes configured to place air external to the stiffener body in fluid communication with the hollow channel in the stiffener body.
14. The transportation vehicle of 11, wherein the at least one battery further comprises:
   a cathode assembly positioned between the hollow channel in the stiffener body and air external to the stiffener body, the cathode assembly comprising:
      a gas diffusion layer;
      a catalyst layer;
      a current collector layer;
   an anode assembly positioned within the hollow channel of the stiffener body, the anode assembly comprising:
      a housing that includes a housing body positioned between a first end cap and a second end cap, wherein the housing body is porous and configured to allow an electrolyte to pass through the housing body; and
      at least one anode positioned within the housing body.
15. The transportation vehicle of 14, wherein the anode assembly comprises a plurality of anodes positioned within the housing body of the housing; and
   wherein at least a portion of the plurality of anodes comprise a disc geometry, wherein the disc geometry includes a conical taper on each face of the disc geometry.
16. The transportation vehicle of 11, wherein the stiffener body further comprises:
   a housing positioned within the hollow channel of the stiffener body, wherein the housing comprises a housing body positioned between a first end cap and a second end cap, and
   wherein the housing body comprises at least one rechargeable battery positioned between the first end cap and the second end cap.
17. A transportation vehicle comprising:
   a vehicle body, the vehicle body comprising an interior surface;
   a plurality of stiffener assemblies coupled to the interior surface of the vehicle body;
   a plurality of intersection node assemblies coupled to the interior surface of the vehicle body, wherein the plurality of stiffener assemblies are configured to extend along the interior surface of the vehicle body and intersect at the plurality of intersection node assemblies;
   wherein at least one of the plurality of intersection node assemblies comprises:
      an intersection node body;
      an inner surface of the intersection node body that forms a hollow interior;
      a plurality of openings in the intersection node body, wherein the plurality of openings are in fluid communication with the hollow interior, and
   wherein at least one of the plurality of stiffener assemblies comprises:
      a stiffener body;
      an inner surface of the stiffener body that forms a hollow channel through the stiffener body, wherein the hollow channel is in fluid communication with a particular opening in the plurality of openings of the intersection node body; and
      a housing positioned within the hollow channel of the stiffener body, wherein the housing includes a housing body positioned between a first end cap and a second end cap; and
      at least one battery.
18. The transportation vehicle of 17, wherein an upper portion of the stiffener body comprises a plurality of holes configured to place air external to the at least one battery in fluid communication with the hollow channel in the stiffener body;
   wherein the at least one battery further comprises:
   a cathode assembly positioned between the hollow channel in the stiffener body and air external to the stiffener body, the cathode assembly comprising:
      a gas diffusion layer;
      a catalyst layer;
      a current collector layer; and
   at least one anode positioned within the housing body, wherein the housing body is porous and configured to allow an electrolyte to pass through the housing body.
19. The transportation vehicle of 18 further comprising:
   at least one pump in fluid communication with the hollow channel of the stiffener body for each of the plurality of stiffener assemblies, wherein the at least one pump is configured to circulate the electrolyte through the hollow channel of the stiffener body for each of the plurality of stiffener assemblies.
20. The transportation vehicle of 17, wherein the housing body comprises at least one rechargeable battery positioned between the first end cap and the second end cap.

## Claims

1. A battery assembly for a transportation vehicle, the battery assembly comprising:
an intersection node assembly comprising:
an intersection node body;
an inner surface of the intersection node body that forms a hollow interior;
a plurality of openings in the intersection node body, wherein the plurality of openings are in fluid communication with the hollow interior,
a plurality of stiffener assemblies, wherein at least one of the plurality of stiffener assemblies comprise:
a stiffener body;
an inner surface of the stiffener body that forms a hollow channel through the stiffener body, wherein the hollow channel is in fluid communication with a particular opening in the plurality of openings of the intersection node body; and
at least one battery.

2. The battery assembly of claim 1, wherein an upper portion of the stiffener body comprises a cylindrical geometry, wherein the cylindrical geometry comprises edges that taper downward from the upper portion to a lower portion of the stiffener body, and wherein the edges taper downward to form a first support base on a side of the stiffener body and a second support base on an opposing side of the stiffener body.

3. The battery assembly of claim 1 or claim 2, wherein the at least one battery further comprises:
a cathode assembly positioned between the hollow channel in the stiffener body and air external to the stiffener body, the cathode assembly comprising:
a hydrophobic gas diffusion layer;
a catalyst layer;
a current collector layer;
an anode assembly positioned within the hollow channel of the stiffener body, the anode assembly comprising:
a housing that includes a housing body positioned between a first end cap and a second end cap, wherein the housing body is porous and configured to allow an electrolyte to pass through the housing body; and
at least one anode positioned within the housing body, preferably wherein an upper portion of the stiffener body comprises a plurality of holes configured to allow an electrolyte to flow from the hollow channel in the stiffener body through the plurality of holes to contact the catalyst layer, preferably wherein the anode assembly comprises a plurality of anodes positioned within the housing body; and
wherein at least a portion of the plurality of anodes comprise a disc geometry, wherein the disc geometry includes a conical taper on each face of the disc geometry.

4. The battery assembly of any preceding claim, wherein the stiffener body further comprises:
a housing positioned within the hollow channel of the stiffener body, wherein the housing comprises a housing body positioned between a first end cap and a second end cap, wherein the housing comprises:
the at least one battery, wherein the at least one battery comprises at least one rechargeable battery positioned between the first end cap and the second end cap.

5. The battery assembly of any preceding claim, wherein the plurality of openings in the intersection node body comprises a first opening and a second opening; and
wherein the plurality of stiffener assemblies comprise:
a first stiffener assembly comprising:
a first stiffener body;
a first inner surface of the first stiffener body that forms a first hollow channel through the first stiffener body, wherein the first hollow channel is in fluid communication with the first opening in the intersection node body;
a first housing that includes a first housing body, the first housing positioned in the first hollow channel, the first housing body coupled to at least a first end cap;
a second stiffener assembly comprising:
a second stiffener body;
a second inner surface of the second stiffener body that forms a second hollow channel through the second stiffener body, wherein the second hollow channel is in fluid communication with the second opening in the intersection node body;
a second housing that includes a second housing body, the second housing body coupled to at least a second end cap; and
a first connector bar that couples the first end cap of the first stiffener assembly to the second end cap of the second stiffener assembly, wherein the first connector bar extends through the intersection node body.

6. The battery assembly of claim 5, wherein the plurality of openings in the intersection node body further comprise a third opening and a fourth opening; and
wherein the plurality of stiffener assemblies further comprise:
a third stiffener assembly comprising:
a third stiffener body;
a third inner surface of the third stiffener body that forms a third hollow channel through the third stiffener body, wherein the third hollow channel is in fluid communication with the third opening in the intersection node body;
a third housing that includes a third housing body, the third housing body coupled to at least a third end cap;
a fourth stiffener assembly comprising:
a fourth stiffener body;
a fourth inner surface of the fourth stiffener body that forms a fourth hollow channel through the second stiffener body, wherein the fourth hollow channel is in fluid communication with the fourth opening in the intersection node body;
a fourth housing that includes a fourth housing body, the fourth housing body coupled to at least a fourth end cap; and
a second connector bar that couples the third end cap of the third stiffener assembly to the fourth end cap of the fourth stiffener assembly, wherein the first connector bar extends through the intersection node body, preferably wherein the first connector bar includes a first arched region that extends towards an upper portion of the intersection node body, wherein at least a portion of the first arched region includes a width that is greater than a width of the first housing and a width of the second housing; and
wherein the second connector bar includes a second arched region that extends towards a lower portion of the intersection node body, and wherein at least a portion of the second arched region includes a width that is greater than a width of the third housing and a width of the fourth housing.

7. The battery assembly of any preceding claim, wherein each stiffener assembly in the plurality of stiffener assemblies further comprises:
a housing that includes a housing body positioned between a first end cap and a second end cap; and
a plurality of rails that extend along the inner surface of the stiffener body, and wherein the housing is configured to slide along a top surface of the plurality of rails within the stiffener body.

8. A transportation vehicle comprising:
a vehicle body, the vehicle body comprising an interior surface;
a plurality of stiffener assemblies coupled to the interior surface of the vehicle body;
a plurality of intersection node assemblies coupled to the interior surface of the vehicle body, wherein the plurality of stiffener assemblies are configured to extend along the interior surface of the vehicle body and intersect at the plurality of intersection node assemblies;
wherein at least one of the plurality of intersection node assemblies comprises:
an intersection node body;
an inner surface of the intersection node body that forms a hollow interior;
a plurality of openings in the intersection node body, wherein the plurality of openings are in fluid communication with the hollow interior, and
wherein at least one of the plurality of stiffener assemblies comprises:
a stiffener body;
an inner surface of the stiffener body that forms a hollow channel through the stiffener body, wherein the hollow channel is in fluid communication with a particular opening in the plurality of openings of the intersection node body; and
at least one battery.

9. The transportation vehicle of claim 8, wherein a first portion of the plurality of stiffener assemblies are configured to helically extend along the interior surface of the vehicle body in a clockwise direction;
wherein a second portion of the plurality of stiffener assemblies are configured to helically extend along the interior surface of the vehicle body in a counterclockwise direction, and
wherein the first portion and the second portion of the plurality of stiffener assemblies are configured to intersect at the plurality of intersection node assemblies.

10. The transportation vehicle of claim 8 or claim 9, wherein an upper portion of the stiffener body comprises a plurality of holes configured to place air external to the stiffener body in fluid communication with the hollow channel in the stiffener body.

11. The transportation vehicle of any of claims 8 to 10, wherein the at least one battery further comprises:
a cathode assembly positioned between the hollow channel in the stiffener body and air external to the stiffener body, the cathode assembly comprising:
a gas diffusion layer;
a catalyst layer;
a current collector layer;
an anode assembly positioned within the hollow channel of the stiffener body, the anode assembly comprising:
a housing that includes a housing body positioned between a first end cap and a second end cap, wherein the housing body is porous and configured to allow an electrolyte to pass through the housing body; and
at least one anode positioned within the housing body, preferably wherein the anode assembly comprises a plurality of anodes positioned within the housing body of the housing; and
wherein at least a portion of the plurality of anodes comprise a disc geometry, wherein the disc geometry includes a conical taper on each face of the disc geometry.

12. The transportation vehicle of any of claims 8 to 11, wherein the stiffener body further comprises:
a housing positioned within the hollow channel of the stiffener body, wherein the housing comprises a housing body positioned between a first end cap and a second end cap, and
wherein the housing body comprises at least one rechargeable battery positioned between the first end cap and the second end cap.

13. A transportation vehicle comprising:
a vehicle body, the vehicle body comprising an interior surface;
a plurality of stiffener assemblies coupled to the interior surface of the vehicle body;
a plurality of intersection node assemblies coupled to the interior surface of the vehicle body, wherein the plurality of stiffener assemblies are configured to extend along the interior surface of the vehicle body and intersect at the plurality of intersection node assemblies;
wherein at least one of the plurality of intersection node assemblies comprises:
an intersection node body;
an inner surface of the intersection node body that forms a hollow interior;
a plurality of openings in the intersection node body, wherein the plurality of openings are in fluid communication with the hollow interior, and
wherein at least one of the plurality of stiffener assemblies comprises:
a stiffener body;
an inner surface of the stiffener body that forms a hollow channel through the stiffener body, wherein the hollow channel is in fluid communication with a particular opening in the plurality of openings of the intersection node body; and
a housing positioned within the hollow channel of the stiffener body, wherein the housing includes a housing body positioned between a first end cap and a second end cap; and
at least one battery.

14. The transportation vehicle of claim 13, wherein an upper portion of the stiffener body comprises a plurality of holes configured to place air external to the at least one battery in fluid communication with the hollow channel in the stiffener body;
wherein the at least one battery further comprises:
a cathode assembly positioned between the hollow channel in the stiffener body and air external to the stiffener body, the cathode assembly comprising:
a gas diffusion layer;
a catalyst layer;
a current collector layer; and
at least one anode positioned within the housing body, wherein the housing body is porous and configured to allow an electrolyte to pass through the housing body, wherein the transportation vehicle further comprises:
at least one pump in fluid communication with the hollow channel of the stiffener body for each of the plurality of stiffener assemblies, wherein the at least one pump is configured to circulate the electrolyte through the hollow channel of the stiffener body for each of the plurality of stiffener assemblies.

15. The transportation vehicle of claim 13 or claim 14, wherein the housing body comprises at least one rechargeable battery positioned between the first end cap and the second end cap.
